# EUROPÄISCHE PATENTSCHRIFT

(11) **EP 0 998 400 B1**
(45) Veröffentlichungstag und Bekanntmachung des Hinweises auf die Patenterteilung: **26.03.2003**
(21) Anmeldenummer: 98945086.1
(22) Anmeldetag: 21.07.1998
(51) Int. Cl.: B60G 17/052, B60G 17/015, A01F 15/04, A01D 67/00

(54) **HÖHENVERSTELL- UND ABFEDEREINRICHTUNG FÜR ERNTEGUT-BALLENFORMMASCHINE**
HEIGHT AND SUSPENSION ADJUSTMENT DEVICE FOR A HARVEST-BALING MACHINE
DISPOSITIF DE REGLAGE EN HAUTEUR ET DE SUSPENSION DESTINE A UNE MACHINE DE MISE EN BOTTES DES MOISSONS

(30) Priorität: 24.07.1997 DE 19731770
(43) Veröffentlichungstag der Anmeldung: 10.05.2000
(73) Patentinhaber: CLAAS Saulgau GmbH, 88348 Bad Saulgau (DE)
(72) Erfinder: GENG, Manfred, D-88348 Saulgau (DE)
(86) Internationale Anmeldenummer: EP9804511
(87) Internationale Veröffentlichungsnummer: WO99004992

(56) Entgegenhaltungen:
- EP-A- 0 741 960
- GB-A- 2 022 028
- US-A- 5 275 430

## Beschreibung

Die Erfindung bezieht sich auf eine Höhenverstell- und Abfedereinrichtung für Erntegut-Ballenformmaschinen gemäß dem Oberbegriff des Patentanspruchs 1. Derartige Erntegut-Ballenformmaschinen werden heute in verschiedenen Leistungsklassen angeboten. Vorallem die hochproduktiven Erntegut-Ballenformmaschinen der oberen Leistungsklasse werden zunehmend überbetrieblich eingesetzt, so daß ihre Effizienz maßgeblich von niedrigen transport- und wartungsbedingten Nebenzeiten bestimmt wird. Großes praktisches Interresse besitzt in diesem Zusammenhang sowohl der zügige Straßentransport beim Wechsel zwischen voneinander entfernt liegenden Ernteflächen als auch die Höhenverstellbarkeit des Aufnahmebereiches derartiger Erntegut-Ballenformmaschinen, damit die einem erhöhten Verschleiß unterliegenden und deshalb häufiger auszutauschenden Bauteile und -gruppen in diesem Bereich auf einfache Weise und in kurzer Zeit ausgewechselt werden können.

Luftfederungen sind für Zugmaschinen und deren Anhänge- oder Aufsattelfahrzeuge im Bereich der Kraftfahrzeugtechnik hinlänglich bekannt und weit verbreitet.

In der EP-A-0 166 882 ist eine höhenverstellbare Luftfederung offenbart, welche zwischen dem Rahmen des beschriebenen Fahrzeugs und seiner Starrachse angeordnet ist. Bei Sattelzügen wird diese ansich bekannte Luftfederung dazu genutzt, die durch die Höhe der Sattelplatte bestimmt Neigung des Sattelaufliegers in Fahrzeuglängsrichtung auszugleichen. Auf diese Weise wird erreicht, daß die Last des Sattelaufliegers über die Reifen aller Achsen des Sattelaufliegers annähernd gleichmäßig auf die Fahrbahn übertragen wird.

Aus der EP 0 529 544 ist ebenfalls für Kraftfahrzeuge, insbesondere die oben genannten Zugmaschinen mit Sattelauflieger eine höhenverstellbare Luftfederung bekannt, die mit Hilfe eines zusätzlich am Zugfahrzeugrahmen adaptierten Luftbalges eine Höhenverstellung des Fahrzeugrahmens mit der auf ihm angeordneten Aufsatteleinrichtung gegenüber der durch den Reifenaußendurchmesser bestimmten Achshöhe ermöglicht. Die funktionsbestimmende Aufgabe einer derartig ausgeführten höhenverstellbaren Luftfederung bezieht sich ebenfalls auf die Höhenverstellbarkeit des durch die Sattelplatte bestimmten Aufsattelpunktes unter dem Gesichtspunkt einer gleichmäßigen Achsbelastung des aufgesattelten Fahrzeugs.

Für landwirtschaftliche Transportgeräte, insbesondere Ladewagen mit zwei oder mehr Achsen ist hingegen in der Patentanmeldung P 197 21 130.5 eine höhenverstellbare Luftfederung beschrieben, die mittels Luftfeder-Rollbälgen ein wahlweises Anheben und Absenken jedes einzelnen Rades oder aller Räder einer Achse oder Fahrzeugseite gegenüber dem Fahrzeugrahmen ermöglicht. Auf diese Weise kann die Neigung des Ladewagens; sein Bodendruck oder die Bodenfreiheit willkürlich verändert werden.

Alle in den erwähnrten Schriften beschriebenen höhenverstellbaren Luftfederungen haben neben dem Ausgleich von Längs- und Querneigungen bei landwirtschaftlichen Arbeitsmaschinen und Zugmaschinen-Aufsattelfahrzeug-Kombinationen die Aufgabe, die Übertragung bodenunebenheitsbedingter Erschütterungen des Fahrwerks auf den Fahrzeugrahmen und die Aufbauten einzuschränken.

Ferner wird in dem Gattungsbildenden US-Patent 4,669,257 eine Ballenformmaschine offenbart, deren laufrädertragende Achse über einenends schwenkbar mit dem Tragrahmen der Ballenformmaschine verbundene Holme verfügt, an deren freien Enden Hubzylinder adaptiert sind, die ebenfalls drehbar am Rahmen der Ballenformmaschine angelenkt sind. Durch Druckbeaufschlagung der Hubzylinder kann die Ballenformmaschine in vertikaler Richtung angehoben werden, so daß die erntegutaufnehmenden Zinken der Pick-up in ihrer Höhe über dem Boden einstellbar sind. Die druckbeaufschlagten Zylinder sind während des Arbeitsvorganges jedoch nicht in der Lage die Übertragung bodenunebenheitsbedingter Stoßbelastungen des Fahrwerks auf den Maschinenrahmen zu dämpfen. Dem Abhilfe schaffend, offenbart die britische Patentanmeldung GB 2 022 028 eine Ballenformmaschine, deren Fahrwerk neben einem Tragrahmen zusätzlich über einoder mehrschichtig ausgeführte Gummipuffer am Rahmen der Ballenformmaschine abgestützt ist, so daß in Abhängigkeit vom Dämpfungsgrad der Gummiblöcke Stoßbelastungen reduziert werden können. Die Gummipuffer sind jedoch nicht mittels eines Mediums in ihrer Höhe in der Weise verstellbar, daß stets die Dämpfungsfunktion erhalten bleibt und zudem eine Lageänderung der Ballenformmaschine durch Anheben oder Absenken des Tragrahmens möglich ist.

Der Erfindung liegt deshalb die Aufgabe zugrunde, eine fluidbetätigte Höhenverstell- und Abfedereinrichtung für Erntegut-Ballenformmaschinen gemäß dem Gattungsbegriff des Anspruchs 1 so zu gestalten, daß auch die unter einem bestimmten Winkel auf das am Fahrzeugrahmen angelenkte Fahrwerk übertragenen Erschütterungen der ballenformenden Arbeitsorgane aufgenommen werden können, ihr fahrzeugrahmen- und fahrwerksschädigender Einfluß damit verringert wird und ein Heben und Senken der Erntegut-Ballenformmaschine um eine Achse quer zur Fahrtrichtung möglich wird.

Erfindungsgemäß wird die Aufgabe durch eine Höhenverstell- und Abfedereinrichtung für eine Erntegut-Ballenformmaschine mit den kennzeichnenden Merkmalen des Anspruchs 1 gelöst.

Eine derartige Gestaltung der Höhenverstell- und Abfedereinrichtung ermöglicht eine weitgehende Dämpfung der durch die ballenformenden Arbeitsorgane erzeugten und bisher auf den Tragrahmen und das Fahrwerk übertragenen Stoßbelastungen und schafft durch in Fahrtrichtung gesehenes vorder- oder rückseitiges Absenken und Anheben der Erntegut-Ballenformmaschine günstige Bedingungen zum Wechsel von verschlissenen oder beschädigten Bauteilen oder -gruppen im Aufnahmebereich und ermöglicht außerdem auf konstruktiv einfache Weise die einer Knickdeichselanlenkung am Ladewagen adäquate Funktion bei einer Erntegut-Ballenformmaschine.

Vorteilhafte Ausgestaltungen sind Gegenstand der Unteransprüche und werden nachfolgend anhand eines in einer Zeichnung dargestellten Ausführungsbeispiels näher erläutert und beschrieben.

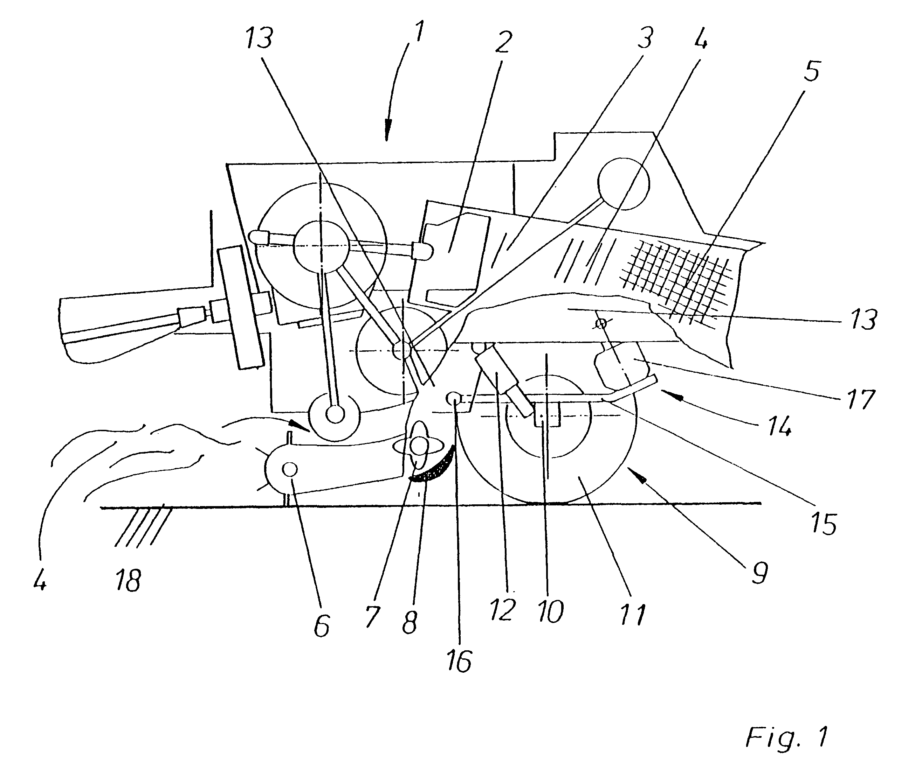

Es zeigt
- Figur 1: eine schematisch dargestellte Erntegut-Ballenformmaschine mit erfindungsgemäßer Höhenverstell- und Abfedereinrichtung.

In Figur 1 ist eine Erntegut-Ballenformmaschine 1 dargestellt, deren Schwingkolben 2 das dem Preßkanal 3 zugeführte Erntegut 4 in diesem zu quaderförmigen Erntegutballen 5 verdichtet. Die Erntegut-Ballenformmaschine 1 ist so ausgeführt, daß das durch die Pick-up 6 aufgenommene und im Bereich des Zinkenrotors 7 und den in einem bestimmten Abstand zueinander quer zur Fahrtrichtung angeordneten Messern 8 zerkleinerte und vorverdichtete Erntegut 4 dem Preßkanal 3 untenseitig zugeführt wird. Das Fahrwerk 9 der Erntegut-Ballenformmaschine ist einachsig ausgeführt und setzt sich aus einer beidseitig mit einem Rad 11 versehenen Achse 10, die im Bereich der Räder 11 über geneigt zum Rahmen 13 der Erntegut-Ballenformmaschine 1 angeordnete und an ihm befestigte Stoßdämpfer 12 verfügt sowie der erfindungsgemäßen Höhenverstell- und Abfedereinrichtung 14 zusammen. Jedem Rad 11 ist eine erfindungsgemäße Höhenverstell- und Abfedereinrichtung 14 zugeordnet, deren Achslenker 15 etwa in ihrem Mittenbereich auf der Achse fixiert sind. Jeder Achslenker 15 ist an seinem pickup-seitigen Ende im Drehpunkt 16 schwenkbar am Rahmen 13 der Erntegut-Ballenformmaschine 1 angelenkt. Das gegenüberliegende Ende jedes Achslenkers 15 ist in Richtung des Rahmens 13 abgewinkelt ausgeführt, so daß der mit seiner Unterseite an diesem Ende befestigte Luftfeder-Rollbalg 17, der obenseitig am Rahmen 13 angelenkt ist eine derartige Schräglage zum Rahmen 13 aufweist, die es ermöglicht die Stoßbelastungen des ballenformenden Schwingkolbens 2 ganz oder teilweise aufzunehmen, so daß das Fahrwerk 9 und der Rahmen 13 entlastet werden. Wird auf einen Querneigungsausgleich verzichtet, kann in einer weiteren nicht dargestellten Ausführungsform die erfindungsgemäße Höhenverstell- und Abfedereinrichtung 14 auch einteilig ausgeführt sein und sich unterhalb des Rahmens 13 über die gesamte Länge der Achse 10 erstrecken. Auf diese Weise kann ein wesentlich voluminöserer Luftfeder-Rollbalg 17 eingesetzt werden, der bei gleicher Belastung weniger druckbeaufschlagt sein muß, so daß er "weicher", d.h. erschütterungsaufnehmender wirkt. Wird die Druckbeaufschlagung in den Luftfeder-Rollbälgen 17 verringert, so führt die Erntegut-Ballenformmaschine 1 eine Schwenkbewegung aus, in deren Ergebnis sich der pick-up-seitig und vor den Rädern 11 liegende Teil der Erntegut-Ballenformmaschine 1 von der Aufstandsfläche 18 weg nach oben bewegt. Wird der Druck in den Luftfeder-Rollbälgen 17 wieder erhöht bewegt sich die Erntegut-Ballenformmaschine 1 entsprechend in umgekehrter Richtung. Durch diese Schwenkbewegung kann erreicht werden, daß die im Einzugsbereich der Erntegut-Ballenformmaschine 1 liegenden, einem erhöhten Verschleiß ausgesetzten Arbeitsorgane 6,7,8 leichter zugänglich und mit geringem Aufwand austauschbar sind.

Damit ist dem Fachmann eine Anleitung gegeben, die erfindungsgemäße Höhenverstell- und Abfedereinrichtung 14 in gleicher oder abgewandelter Form an beliebig ausgeführten Erntegut-Ballenformmaschinen einzusetzen, um die beschriebenen Effekte zu erzielen.

## Patentansprüche

1. Gezogene, ein- oder mehrachsige Erntegut-Ballenformmaschine (1), die flächig oder in Schwadform abgelegtes Erntegut (4) aufnimmt und ihrem Ballenformaggregat zuführt, welches in Abhängigkeit vom Wirkprinzip Erntegutballen (5) verschiedener Geometrien, insbesondere Quaderballen unterschiedlicher Größe, förmt, und deren ballenformenden Arbeitsorgane Massenkräfte in oder unter einem bestimmten Winkel in Fahrzeuglängsrichtung in den Tragrahmen (13) und das Fahrwerk (9) einleiten, wobei das Fahrwerk (9) mittels fluidbetätigtem Stellaggregat (17) vertikalbeweglich mit dem Tragrahmen (13) verbunden ist
**dadurch gekennzeichnet,**
**daß** das fluidbetätigte Stellaggregat (17), das zwischen der Fahrzeugachse (10) und dem Tragrahmen (13) in einer die Massenkräfte der ballenformenden Arbeitsorgane (2) ganz oder teilweise aufnehmenden Lage zwischengeschaltet ist, eine Höhenverstell- und Abfedereinrichtung bildet.

2. Ballenformmaschine nach Anspruch 1,
**dadurch gekennzeichnet,**
**daß** das fluidbetätigte Stellaggregat geteilt ausgeführt und an beiden Achsseiten fixiert ist.

3. Ballenformmaschine nach Anspruch 1 und 2,
**dadurch gekennzeichnet,**
**daß** das fluidbetätigte Stellaggregat liftbare Stell- und Federelmente aufweist.

4. Ballenformmaschine nach Anspruch 3,
**dadurch gekennzeichnet,**
**daß** die Stell- und Federelmente durch großvolumige Luftfeder-Rollbälge (17) gebildet werden.

## Claims

1. A towed, single-axle or multi-axle crop material bale-forming machine (1) which picks up crop material (4) deposited in flat or windrow form and feeds it to the bale-forming unit thereof which in dependence on the operative principle forms crop material bales (5) of different geometries, in particular square bales of different sizes, and whose bale-forming working members apply gravity forces to the support frame (13) and the chassis (9) in or at a given angle to the longitudinal direction of the vehicle, wherein the chassis (9) is connected to the support frame (13) vertically movably by means of a fluid-actuated control unit (17), **characterised in that** the fluid-actuated control unit (17) which is interposed between the vehicle axle (10) and the support frame (13) in a position which entirely or partially carries the gravity forces of the bale-forming working members (2) forms a height adjustment and springing device.

2. A bale-forming machine according to claim 1 **characterised in that** the fluid-actuated control unit is of a divided structure and is fixed at both sides of the axle.

3. A bale-forming machine according to claim 1 and claim 2 **characterised in that** the fluid-actuated control unit has liftable control and spring elements.

4. A bale-forming machine according to claim 3 **characterised in that** the control and spring elements are formed by large-volume air spring rolling bellows members (17).

## Revendications

1. Machine à former des balles de produit récolté (1) tractée, qui ramasse le produit récolté (4) déposé à plat ou sous forme d'andains, et l'achemine vers son dispositif de formation de balles, dispositif qui, en fonction de son principe de fonctionnement, forme des balles (5) de produit récolté de formes différentes, en particulier des balles parallélépipédiques de différentes dimensions, et dont les organes de formation des balles introduisent des forces dues aux masses, dans la direction longitudinale du véhicule ou sous un certain angle dans la direction longitudinale du véhicule, dans le cadre support (13) et dans le châssis (9), le châssis (9) étant lié au cadre support (13) avec possibilité de déplacement dans la direction verticale au moyen d'un organe de réglage (17) actionné par fluide, **caractérisée en ce que** l'organe de réglage (17) actionné par fluide, qui est disposé entre l'axe (10) du véhicule et le cadre support (13) dans une position absorbant en totalité ou partiellement les forces des masses des organes (2) de formation des balles, forme un dispositif de réglage en hauteur et d'amortissement.

2. Machine à former des balles selon la revendication 1, **caractérisée en ce que** l'organe de réglage actionné par fluide est réalisé en plusieurs parties et est fixé de part et d'autre de l'axe.

3. Machine à former des balles selon les revendications 1 et 2, **caractérisée en ce que** l'organe de réglage actionné par fluide comporte des éléments de réglage et des éléments amortisseurs relevables.

4. Machine à former des balles selon la revendication 3, **caractérisée en ce que** les éléments de réglage et les éléments amortisseurs sont formés de coussins-amortisseurs pneumatiques (17).
